(19)

**Europäisches Patentamt**
**European Patent Office**
**Office européen des brevets**

(11) **EP 4 687 072 A1**

(12) **EUROPEAN PATENT APPLICATION**

(43) Date of publication:
**04.02.2026  Bulletin 2026/06**

(21) Application number: **25184369.4**

(22) Date of filing: **23.06.2025**

(51) International Patent Classification (IPC):
**G06N 3/049** (2023.01)    **G06N 3/092** (2023.01)
**G06N 3/0985** (2023.01)    **G06N 3/045** (2023.01)

(52) Cooperative Patent Classification (CPC):
**G06N 3/092; G06N 3/045; G06N 3/049;
G06N 3/0985**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.07.2024  IN 202421058111**

(71) Applicant: **Tata Consultancy Services Limited
Maharashtra (IN)**

(72) Inventors:
• **ISLAM, Syed Mujibul
700135 Kolkata (IN)**
• **KADWAY, Chetan Sudhakar
700135 Kolkata (IN)**

• **MUKHOPADHYAY, Shalini
700135 Kolkata (IN)**
• **ROY CHOUDHURY, ABHISHEK
700135 Kolkata (IN)**
• **DEY, Swarnava
700135 Kolkata (IN)**
• **DEY, Sounak
700135 Kolkata (IN)**
• **MUKHERJEE, Arijit
700135 Kolkata (IN)**
• **PAL, Arpan
700135 Kolkata (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR RAPID AUTOMATED GENERATION OF OPTIMIZED SPIKING NEURAL NETWORKS FOR NEUROMORPHIC DEVICES**

(57)    State of art techniques such as ANN2SNN yield sub-optimal performance for Spiking Neural Networks (SNNs), while with SNN search space Neural Architecture Search (NAS) based approach many times the target SNN hardware constraints might not be met or there can be accuracy loss. A method and system for rapid automated generation of optimized SNNs for neuromorphic devices is disclosed. A Reinforcement Learning (RL)-NAS technique is utilized to obtain Deep Neural Networks (DNNs) using raw training dataset in non-spike data format and set of SNN constraints in accordance with the neuromorphic hardware of target neuromorphic devices along with general target hardware constraints, wherein the set of constraints are imbibed into the NAS space in form of constrained graph. An optimal DNN is model searched in an SNN contained NAS space and trained on the raw data. An optimal SNN model is obtained from the trained DNN model via neuromorphic OEM converter.

EP 4 687 072 A1

FIG. 1B

**Description**

CROSS-REFERENCE TO RELATED APPLICATIONS AND PRIORITY

The present application claims priority from Indian patent application no. 202421058111, filed on 31 July 2024.

TECHNICAL FIELD

The embodiments herein generally relate to the field of neuromorphic computing and, more particularly, to a method and system for rapid automated generation of optimized Spiking Neural Networks (SNNs) for neuromorphic devices.

BACKGROUND

Edge computing is becoming a preferred choice of Artificial Intelligence (AI) or Machine Learning (ML) model deployment, as it reduces the cost of running expensive Graphics Processing Unit (GPU) servers in the cloud. Along with reduced server cost, it helps with protecting users' data privacy. Further, in applications such as satellite, preprocessing of data on satellite enables filtering redundant data to reduce unnecessary consumption of transmission bandwidth for large volume of redundant data. Use of AI accelerators such as neuromorphic platforms that are power and latency optimized are more useful over general-purpose processors. The AI accelerators such as neuromorphic platforms are well researched for edge devices as they have characteristically low power consumption. However, building SNN for AI applications for the target neuromorphic edge device is an area of research and approaches for efficient and fast building of SNNs for the edge device needs to be explored.

Various approaches explored for generating SNNs for target devices or edge devices, having resource constraints, are discussed below. In addition to addressing constraints of end devices, the neuromorphic hardware constraints need to be addressed to enable time efficient generation of SNNs.

a) Handcrafted SNN model. The challenges utilizing the conventional handcrafting approach are:

- Complexity of Neuron Models: The complexity of SNN neuron models, such as integrate-and-fire, spike response, or Hodgkin-Huxley, can pose difficulties in accurately simulating the evolution of the membrane potential and spike generation.
- Training and Inference: Training SNNs to be competitive with conventional deep learning while also allowing for efficient mapping to hardware is a significant challenge. This includes developing effective training methods that can leverage the temporal dynamics of spikes.
- Model Selection: Identifying the most appropriate model for classification tasks that demand high accuracy and low-performance loss is challenging. It requires comparing the performance, behavior, and spike generation of multiple SNN models using consistent inputs and neurons.
- Computational Efficiency: Quantifying the number of spiking operations required by each model to process the same inputs and produce equivalent outputs is essential for assessing computational efficiency. Variations in biological plausibility and computational efficiency among models necessitate careful selection SNNs for specific tasks or target applications.
- Architecture Design: The design of SNN architectures remains relatively unexplored, and finding optimal structures that can exploit the advantages of spiking neurons is still an ongoing research area.
- Hardware Implementation: The implementation of deep SNNs on neuromorphic hardware platforms, which have great potential for real-world applications, is not straightforward. It involves addressing the compatibility between the algorithms used for training and the hardware's capabilities.

These challenges highlight the need for ongoing research and development in the field of SNNs to improve their practicality and effectiveness in simulating brain-like computation and information processing. The time taken and dependency of SME and lack of hardware options make it further difficult.

b) ANN2SNN

The conversion from Artificial Neural Networks (ANNs) to Spiking Neural Networks (SNNs), often referred to as ANN2SNN, even though introduces automation presents several challenges. Here are some of the key issues:

- High Power Consumption and Complex Calculations: ANNs are known for their high-power consumption and complex calculations, which can be a significant challenge when trying to implement them in power-constrained devices.

- Conversion Error and Information Loss: During the ANN2SNN conversion process, there can be a loss of information and conversion errors, especially under low time steps. This can affect the accuracy and performance of the SNN.
- Inferior Performance at Low Latency: Traditional ANN2SNN methods may result in inferior performance when operating at low latency, with accuracy rates dropping significantly.
- Discrete and Non-Differentiable Outputs: The binary and non-differentiable nature of the outputs from spiking neurons in SNNs can disable traditional backpropagation training algorithms, which are essential for ANNs.
- Memory Efficiency: Training SNNs can be memory-intensive, and while ANN2SNN provides a low-cost training method, it often requires many inference steps to mimic the well-trained ANN for good performance.

Further, more ANN2SNN utilizes both the ANN and SNN for inferencing and does not serve purpose where intention is to obtain SNN based inferencing.

Researchers are actively working on overcoming these challenges by developing new models and training frameworks that can optimize the conversion process and improve the performance of SNNs. For instance, the IC-SNN model aims to address issues like residual membrane potential and rate encoding to achieve high accuracy with fewer time steps1. Similarly, the SNN2ANN framework proposes a weight-sharing architecture and spiking mapping units to train SNNs in a fast and memory-efficient way.

c) Approaches such as AutoSNN, search SNN architectures in SNN search space. These approaches require spiked input data that requires preprocessing the raw data. However, normal world data which is used in training ANN needs to be converted to Spiking domain. The technical challenge is that these data conversion needs very careful configuration and threshold selection to maintain accuracy.

Thus, the ANN2SNN approaches can yield sub-optimal performance for SNNs, while with NAS approaches with SNN search space most of the time the target SNN hardware constraints might not be met or there can be accuracy loss.

SUMMARY

Embodiments of the present disclosure present technological improvements as solutions to one or more of the above-mentioned technical problems recognized by the inventors in conventional systems.

For example, in one embodiment, a method for rapid automated generation of optimized Spiking Neural Networks (SNNs) for neuromorphic devices is provided.

The method includes receiving a raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs), multi-objective optimization priorities specifying at least one of metrics comprising an accuracy for classification task, a Root Mean Squared Error (RMSE) for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha, and a discount rate parameter gamma.

Further, the method includes defining a Reinforcement Learning NAS (RL-NAS) space, the RL-NAS space specifying a plurality of layers available for selection, the plurality of layers comprising a set of primary layers, a set of composite layers, a set of activation layers.

Further, the method includes generating a SNN constrained RL-NAS space by imbibing into the RL NAS space the set of SNN constraints in form of constrained graph, wherein the set of SNN constraints specify layers ordering, valid quantization bit width, layer shape, padding, and data format associated with each of a plurality of neuromorphic hardware of neuromorphic devices.

Furthermore, the method includes obtaining an optimal SNN compliant DNN model having highest reward value by performing iterations during reinforcement learning within the SNN constrained RL-NAS space using a Faster-NAS (F-NAS) technique based on a modified F-NAS reward as a function of the SHD parameter, a NPU count and a Multiply Accumulate Count (MAC), where the higher reward is given for maximization of SHD and minimization of the MAC count and the NPU count, wherein the optimal SNN compliant DNN model meets the metric requirements for the specified task description and the NPU count for the specified hardware.

Further, the method includes training the optimal SNN compliant DNN model on the raw training dataset using standard hyperparameters by using an AutoML technique.

Furthermore, the method includes obtaining via a neuromorphic OEM converter associated with the target neuromorphic device the optimal SNN, from the trained optimal DNN model, for deployment on the target neuromorphic device for executing the target application during inference stage.

In another aspect, a system for rapid automated generation of optimized Spiking Neural Networks (SNNs) for neuromorphic devices is provided. The system comprises a memory storing instructions; one or more Input/Output (I/O) interfaces; and one or more hardware processors coupled to the memory via the one or more I/O interfaces, wherein the one or more hardware processors are configured by the instructions to receive a raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs), multi-objective optimization priorities specifying at least one of metrics comprising an accuracy for classification task, a Root Mean Squared Error (RMSE) for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha, and a discount rate parameter gamma.

Further, the one or more hardware processors are configured to define a Reinforcement Learning NAS (RL-NAS) space, the RL-NAS space specifying a plurality of layers available for selection, the plurality of layers comprising a set of primary layers, a set of composite layers, a set of activation layers.

Further, the one or more hardware processors are configured to generate a SNN constrained RL-NAS space by imbibing into the RL NAS space the set of SNN constraints in form of constrained graph, wherein the set of SNN constraints specify layers ordering, valid quantization bit width, layer shape, padding, and data format associated with each of a plurality of neuromorphic hardware of neuromorphic devices.

Furthermore, the one or more hardware processors are configured to obtain an optimal SNN compliant DNN model having highest reward value by performing iterations during reinforcement learning within the SNN constrained RL-NAS space using a Faster-NAS (F-NAS) technique based on a modified F-NAS reward as a function of the SHD parameter, a NPU count and a Multiply Accumulate Count (MAC), where the higher reward is given for maximization of SHD and minimization of the MAC count and the NPU count, wherein the optimal SNN compliant DNN model meets the metric requirements for the specified task description and the NPU count for the specified hardware.

Further, the one or more hardware processors are configured to train the optimal SNN compliant DNN model on the raw training dataset using standard hyperparameters by using an AutoML technique.

Furthermore, the one or more hardware processors are configured to obtain via a neuromorphic OEM converter associated with the target neuromorphic device the optimal SNN, from the trained optimal DNN model, for deployment on the target neuromorphic device for executing the target application during inference stage.

In yet another aspect, there are provided one or more non-transitory machine-readable information storage mediums comprising one or more instructions, which when executed by one or more hardware processors causes a method for rapid automated generation of optimized Spiking Neural Networks (SNNs) for neuromorphic devices.

The method includes receiving a raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs), multi-objective optimization priorities specifying at least one of metrics comprising an accuracy for classification task, a Root Mean Squared Error (RMSE) for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha, and a discount rate parameter gamma.

Further, the method includes defining a Reinforcement Learning NAS (RL-NAS) space, the RL-NAS space specifying a plurality of layers available for selection, the plurality of layers comprising a set of primary layers, a set of composite layers, a set of activation layers.

Further, the method includes generating a SNN constrained RL-NAS space by imbibing into the RL NAS space the set of SNN constraints in form of constrained graph, wherein the set of SNN constraints specify layers ordering, valid quantization bit width, layer shape, padding, and data format associated with each of a plurality of neuromorphic hardware of neuromorphic devices.

Furthermore, the method includes obtaining an optimal SNN compliant DNN model having highest reward value by performing iterations during reinforcement learning within the SNN constrained RL-NAS space using a Faster-NAS (F-NAS) technique based on a modified F-NAS reward as a function of the SHD parameter, a NPU count and a Multiply Accumulate Count (MAC), where the higher reward is given for maximization of SHD and minimization of the MAC count and the NPU count, wherein the optimal SNN compliant DNN model meets the metric requirements for the specified task description and the NPU count for the specified hardware.

Further, the method includes training the optimal SNN compliant DNN model on the raw training dataset using standard hyperparameters by using an AutoML technique.

Furthermore, the method includes obtaining via a neuromorphic OEM converter associated with the target neuromorphic device the optimal SNN, from the trained optimal DNN model, for deployment on the target neuromorphic device for executing the target application during inference stage.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system, for rapid automated generation of optimized Spiking Neural Networks (SNNs) for neuromorphic devices, in accordance with some embodiments of the present disclosure.
FIG. 1B illustrates an architectural overview of the system of FIG. 1A, in accordance with some embodiments of the present disclosure.
FIGS. 2A through 2B (collectively referred as FIG. 2) is a flow diagram illustrating a method for rapid automated generation of optimized Spiking Neural Networks (SNNs) for neuromorphic devices, using the system depicted in FIG. 1A and 1B, in accordance with some embodiments of the present disclosure.
FIG. 3 explains learning of the constraints via the modified F-NAS reward function, in accordance with some embodiments of the present disclosure.
FIGS. 4A through 4C (collectively referred as FIG. 4) are graphical depictions for performance analysis of the system of FIG. 1, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Furthermore to the technical challenges of existing approaches for Spiking Neural Networks (SNNs) generation, optimal utilization of the neural processor units (NPU) capacity of a SNN Original Equipment Manufacturer (OEM) of a target neuromorphic device is hardly addressed by existing SNN generation approaches.

In Artificial Neural Network (ANN), also interchangeably referred herein as Deep Neural Network (DNN) or Deep Q Networks (DQN), a model is optimized on the basis of model size for a target edge hardware. Similarly in the SNN domain, the compute of a hardware depends on the number of neural processor units (NPU) the model occupies. The mapping of model from model description (weights and activation) is specific to a SNN Original Equipment Manufacturer (OEM). The number of NPU a generated SNN model occupies can be mapped using OEM Application Programming Interface (API). Thus, a method and system is disclosed herein, also referred to as Hybrid Auto SNN synthesis, provides NPU optimization by incorporating the NPU factor as SNN constraint in a Neural Architecture Search (NAS) space and into a reward function during ANN model development using a Reinforcement Learning (RL) Neural Architecture Search (NAS) technique. The resulting output of NAS generates an efficient DNN model with optimum NPU utilization. In an example implementation of the method disclosed, the DNN model utilize 8 NPU cores whereas AKIDA™ board has 80 NPU. This allows efficient resource utilization of the hardware capability of the target device by allowing utilization of rest of the NPU for different model inference tasks, or for a larger deep learning pipeline task.

The method and system provides rapid automated generation of optimized Spiking Neural Networks (SNNs) for neuromorphic devices utilizing a Reinforcement Learning (RL) Neural Architecture Search (NAS) technique with search space constrained by a set of SNN constraints of neuromorphic hardware of target neuromorphic device. The Faster-NAS (F-NAS) technique receives raw training dataset in non-spike data format with a set of constraints that includes standard target device constraints and the set of SNN constraints, imbibed into the NAS space in form of constrained graph. An optimal DNN is model searched in an SNN constrained NAS space and is trained on the raw data. Further, an optimal SNN model is obtained from the trained DNN model via neuromorphic OEM converter. This approach allows transfer of existing DNN models to SNN domain with efficient search and the knowledge of existing DNN benefits the SNN design. The reason being ANN NAS is mature and developed domain. The method imbibes SNN constraint and OEM based HW optimization providing the software and hardware optimized model.

ANN/ DNN do not have any constraints for layer ordering and layers can be arranged in any fashion chosen by RL NAS approach as defined by F-NAS. However, in SNN domain, there is an exhaustive list of constraints that needs to be adhered to for RL NAS to generate new DNN model. For the given task, in addition to meeting minimum NPU count with high accuracy and minimum latency, the model needs to search for optimum model in a search space defined with constraints in layers ordering, valid quantization, layer shape, padding, data format, etc. All such constraints are defined in search space for efficient RL of the Deep Q network.

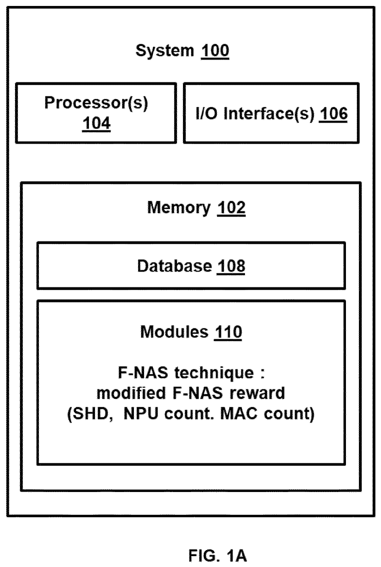

Referring now to the drawings, and more particularly to FIGS. 1A through 4C, where similar reference characters denote corresponding features consistently throughout the figures, there are shown preferred embodiments, and these embodiments are described in the context of the following exemplary system and/or method.

FIG. 1A is a functional block diagram of a system 100, for rapid automated generation of optimized Spiking Neural Networks (SNNs) for neuromorphic devices, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. Raw training dataset in non-spike data format, the set of constraints, metrics for F-NAS etc., are received through the I/O interface 106. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110, such as module for executing the F-NAS technique. The F-NAS utilized by the method disclosed herein is the technique disclosed by applicant in applicant's Indian patent application number 202321067480 titled INTEGRATED PLATFORM ENABLING RAPID AUTOMATED GENERATION OF OPTIMIZED DNNs FOR EDGE DEVICES, filed on 9th of October 2023. The F-NAS herein however utilizes a modified reward that incorporates NPU count, and Multiply Accumulate Count (MAC) count along with scaled Hamming Distance (SHD).

The plurality of modules 110 include programs or coded instructions that supplement applications or functions performed by the system 100 for executing different steps involved in the process of optimal SNN generation for a target neuromorphic device, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110. The database 108 can store the raw training dataset, the set of constraints, generated optimal SNN models to be deployed on target neuromorphic device and so on.

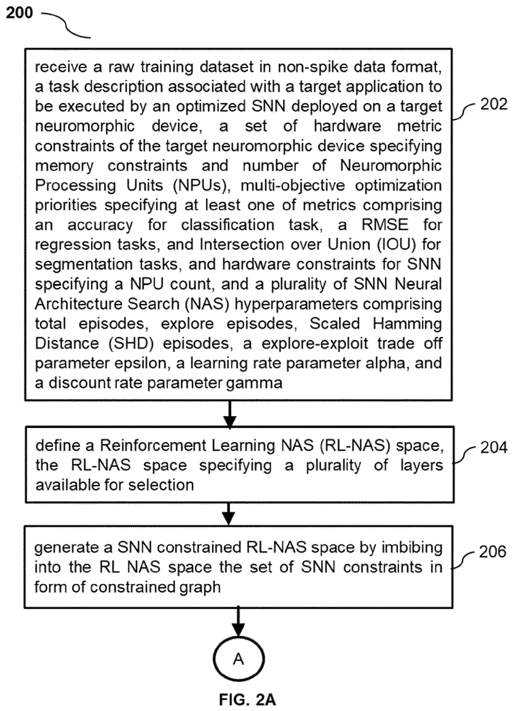

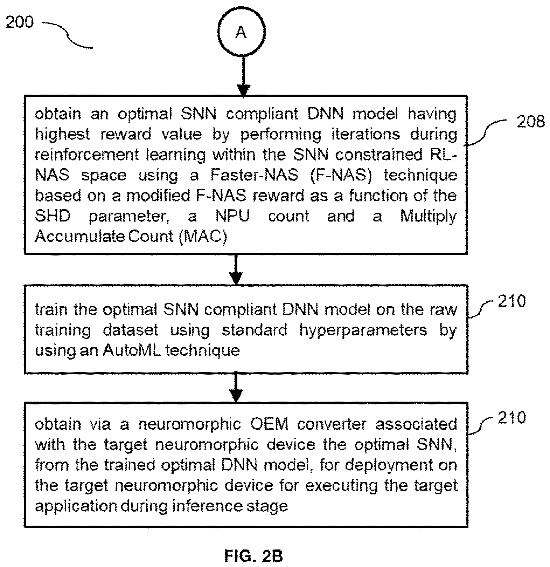

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 through FIG. 4C.

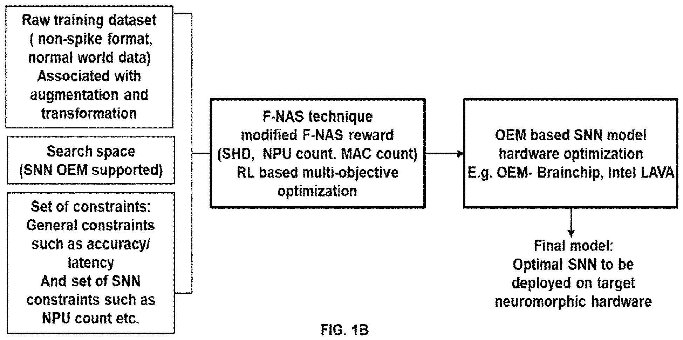

FIG. 1B illustrates an architectural overview of the system of FIG. 1A, in accordance with some embodiments of the present disclosure. FIG. 1B is better explained in conjunction with FIG. 2.

FIGS. 2A through 2B (collectively referred as FIG. 2) is a flow diagram illustrating a method 200 for rapid automated generation of optimized Spiking Neural Networks (SNNs) for neuromorphic devices, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200 and FIG. 1B, the one or more hardware processors 104 are configured by the instructions to receive the raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs). ANN or DNN target device configuration is defined by RAM, Flash. For example, Nano 33 BLE has 1MB Flash/256KB RAM. For SNN, the target configuration is defined by number of NPU. For example Akida AKD1000 has 80NPU. Further, also received are multi-objective optimization priorities specifying metrics comprising an accuracy for classification task, a Root Mean Squared Error (RMSE) for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha , and a discount rate parameter gamma. The IOU is a performance metric used to evaluate the accuracy of annotation, segmentation, and object detection algorithms. The number of NPU count above specifies maximum number of NPUs available on the target neuromorphic hardware. However, not all NPU can be used for deployment. Some are reserved for on device system. Also, there might be further specific constraints of using maximum specific NPUs, hence the NPU count specifies it. The explore-exploit trade off parameter epsilon is a Reinforcement Learning (RL) parameter, which divides the RL NAS ( in the F-NAS technique) into (i) an exploration phase were the RL agent gathers overall information to make decision, and (ii) exploitation phase where it greedily works toward maximization of the reward function. The learning rate parameter alpha and the discount rate parameter gamma are RL parameters used for RL agent training for F-NAS technique.

At step 204 of the method 200, the one or more hardware processors 104 are configured by the instructions to define a Reinforcement Learning NAS (RL-NAS) space. The RL-NAS space specifies a plurality of layers available for selection. The plurality of layers comprises of a set of primary layers, a set of composite layers, and a set of activation layers. The search space is defined as collection of primary layers (MaxPool, Dense) and composite layers (ConvBlock, SeparableConvBlock) and activation layers (for AKIDA, ReLU3.57, ReLU6 ) of supported SNN layers.

At step 206 of the method 200, the one or more hardware processors 104 are configured by the instructions to generate a SNN constrained RL-NAS space by imbibing into the RL NAS space the set of SNN constraints in form of constrained graph. In constraint satisfaction research in artificial intelligence and operations research, the constraint graph is to represent relations among constraints in a constraint satisfaction problem. A constraint graph is a special case of a factor graph, which allows for the existence of free variables. The set of SNN constraints specify layers ordering, valid quantization bitwidth, layer shape, padding, and data format associated with each of a plurality of neuromorphic hardware of neuromorphic devices.

The set of SNN constraints specify a set of rules, wherein a subset of rules from the set of rules for a first type of neuromorphic hardware (AKIDA AKD1000 neuromorphic processor™) from among the plurality of neuromorphic hardware comprises of:

    i. selected layers from among the plurality of layers must be last channels
    ii. all processing quantized layers and ActivationDiscreteRelu must have the valid quantization bitwidth.
    iii. a Dense layer input shape belongs to (N) or (1, 1, N),
    iv. a BatchNormalization layer 'axis' set to -1,

v. a BatchNormalization layer cannot be negative gammas,

vi. Reshape layers tensor shape belongs to (N,) or (1, 1, N),

vii. only one pooling layer to be used in each block, and

viii. a MaxPool2D layer must have the same 'padding' as the corresponding processing quantized layer.

The layer ordering constraint for SNN, for the first neuromorphic architecture, specifically AKIDA AKD1000 neuromorphic processor™ comprises:

i. a block of Keras layers to start with a processing quantized layer,

ii. if a BatchNormalization or GlobalAvgPool2D layer is present, to be placed before the activation layer,

iii. a Flatten layer to be used only before a Dense layer, and

iv. the activation layer other than ReLU can only be used in the last layer.

At step 208 of the method 200, the one or more hardware processors 104 are configured by the instructions to obtaining an optimal SNN compliant DNN model having highest reward value by performing iterations during reinforcement learning within the SNN constrained RL-NAS space using a Faster-NAS (F-NAS) technique based on a modified F-NAS reward. The F-NAS technique as mentioned earlier is disclosed in detail in applicant's Indian Patent application number 202321067480 and not detailed herein for brevity. Along with the SHD parameter, the reward function additionally includes the NPU count and the MAC. A higher reward is given for maximization of SHD, and minimization of the MAC and the NPU count. The optimal SNN compliant DNN model meets the metric requirements (i.e set of hardware metric constraints, the accuracy for, the RMSE and the IOU) for the specified task description and the NPU count for the specified hardware.. The modified F-NAS reward is mathematical function represented as

$$R = \frac{(W_1(scaled\_hamming\_distance) + W_2\sigma(-NPU_{count}) + + W_3\sigma(-MAC_{count})}{W_1 + W_2 + W_3}, \ ---- (1)$$

wherein $W_1, W_2$ and $W_3$ refer to the weights provided with respect to task priority/multiple objectives to be fulfilled. The weights are assigned based on which parameter needs to be prioritized.

During the explore-exploit phase of the RL based NAS ( also referred as DeeQ Learning), the F-NAS in the earlier filed patent application 202321067480, performed connections between layers without any constraints during the search phase. In the F-NAS the explore phase was used to score randomly generated networks from search space generated by NAS and the exploit phase is used to provide efficient network architectures from the scoring learnt in explore phase, while multi objective optimization was achieved to obtain the pareto optimal front in prior work, the search space constraint did not exist. In the method disclosed herein, the DeepQ learning has to learn and provide efficient multi-objective optimized (NPU optimized) SNN architecture by using the constrained graph that defines the search space. The RL learns in constrained search space to achieve a multi-objective optimization for SNN architecture in automated fashion. The modified F-Nas reward includes the NPU count. The modified F-NAS reward is mathematical function represented as in equation 1 above as $R = \frac{(W_1(scaled\_hamming\_distance) + W_2\sigma(-NPU_{count}) + + W_3\sigma(-MAC_{count})}{W_1 + W_2 + W_3}$ , $W_1, W_2$ and $W_3$ refer to the weights provided with respect to task priority/ multiple objectives to be fulfilled.

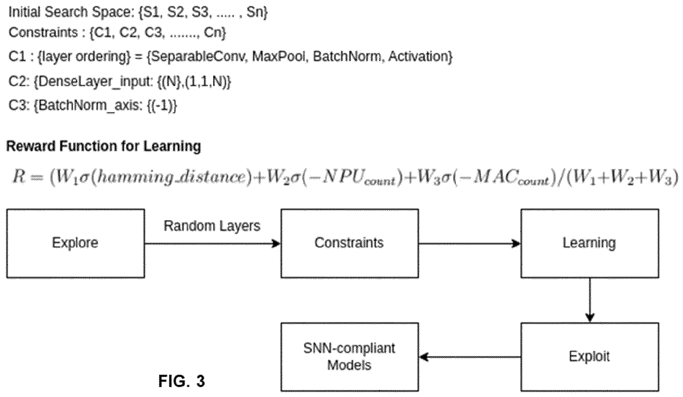

FIG. 3 explains learning of the constraints via the modified F-NAS reward function, in accordance with some embodiments of the present disclosure. A flowchart of hybrid auto SNN is depicted, where the Reinforcement Learning generates random layers compliant with SNN constraints (to be followed by the ANN2SNN convertors of OEM). The learning module learns the constrained search space and create SNN compliant ANN models.

At step 210 of the method 200, the one or more hardware processors 104 are configured by the instructions to train the optimal SNN compliant DNN model on

the raw training dataset using standard hyperparameters by using an AutoML technique.

**F-NAS algorithm with logical flow having modified F-NAS reward function:**

1. Exploring the SNN based search space using the modified SHD - scaled hamming distance (also referred to as zero shot embedded neural architecture search), SNN based constraints and NPU - neural processing unit as another SNN based matrix for the RL equation, the step comprises of:

a. creating a list of possible neural network architectures using a SNN based search space, wherein possible neural network architecture are complaint to the constraints defined by the user and target hardware specification.

b. computing all required metrics of a reward function for each possible neural network architectures.

c. storing the computed metrics and state-action pairs.

d. setting the weight and scaling factor metrics in reward function.

e. computing the multi-objective reward value for each neural architecture in created list.

f. training the Deep-QL( also referred to as DNN) model using the state-action pairs and multi-objective reward value, wherein Deep-QL is model trained on episodes using reinforcement learning.

g. creating new neural network architectures using trained Deep-QL model, which helps to maximize the reward function value.

h. validating the new neural network architectures are complaint to the constraints defined by the user and targeted hardware specifications.

i. computing all required metrics of a reward function and multi-objective reward value for each new neural network.

j. storing the computed metrics, multi-objective reward value and state-action pairs.

k. training each Deep-Q model (DNN model) on state-action-reward pairs for top K% reward values.

2. Selecting an optimal SNN compliant DNN network architecture with highest reward value, wherein DNN is complaint to the SNN constraints of the target neuromorphic hardware.

3. The obtained DNN model during NAS search. Once the optimal model is found, the model is trained. Thus is done with general or standard hyperparameters (learning rate, momentum, L1 normalization, etc.) used for model training manually or by using any AutoML technique.

4. Training the optimal SNN complaint DNN model architectures on hyperparameters by using the AutoML, training the DNN model on the raw training data set received in non-spike format.

At step 212 of the method 200, the one or more hardware processors 104 are configured by the instructions to obtain via a neuromorphic OEM converter associated with the target neuromorphic device the optimal SNN, from the trained optimal DNN model, for deployment on the target neuromorphic device for executing the target application during inference stage.

Experimental Setup:

**Dataset & Pre-processing:** A 38-Cloud dataset is used which contains 384x384 patches taken from 18 high-resolution Landsat-8 scene images, roughly of size 8000x8000 pixels. Dataset reference : Mohajerani, S. & Saeedi, P. Cloud-Net: An End-To-End Cloud, Detection Algorithm for Landsat 8 Imagery in IGARSS 2019 - 2019 IEEE International Geoscience and Remote Sensing Symposium (July 2019), 1029-1032. *and* Mohajerani, S., Krammer, T. A. & Saeedi, P. "A Cloud Detection Algorithm for Remote Sensing Images Using Fully Convolutional Neural Networks" in 2018 IEEE 20th International Workshop on Multimedia Signal Processing (MMSP) (Aug. 2018), 1-5. This dataset contains images with 4 bands (Red, Green, Blue, and Near Infrared) at 30-meter spatial resolution. Dataset has 8400 training patches and 9201 testing patches with corresponding pixel level binary cloud mask. For patch-level cloud cover detection for the experiments herein, the 384x384 patches into 32x32 patches are further cropped with only 3 bands (Red, Green, and Blue). Each of the 32x32 patches is either labelled CLEAR or CLOUDY if the cloud cover percentage is between (0,45] and (45,100] respectively.

Objective: Generating optimal SNN models to be deployed on neuromorphic device on satellite for Patch-level Cloud Cover Detection.

Cloud Cover Detection is a pixel-level segmentation problem, but at its core requires us to perform two sub-tasks, i.e. cloud localization and cloud cover percentage estimation. Moreover, AKIDA NSoC imposes certain compatibility checks before a CNN can be mapped to AKD1000, therefore a patch-to-patch class binary classifier is chosen, which helps to build a CNN that complies with AKIDA hardware constraints and balances the triage of accuracy, latency, and power. Hence, the NAS search space is initialized with AKIDA conversion-compatible layer blocks that comply to CNN design constraints in terms of input shape, supported layers, layer orderings and layer hyper-parameters.

Hardware & Software Used: Neural Architecture Search, CNN training and SNN conversion are performed on a Nvidia A5500 GPU™ system with 24GB VRAM. The Brainchip's ™ CNN2SNNN conversion toolkit and Akida MetaTF 2.6.0 are used to deploy SNN models onto Raspberry Pi-based Akida development kit (Broadcom quadcore ARM Cortex -A72 CPU, 8GB RAM, AKD1000 @300MHz neuromorphic processor). CNN2SNN conversion toolkit helps us create SNNs that are structurally and functionally equivalent to the NAS found CNN. Three main steps of CNN2SNN conversion flow are:

(i) Conversion compatibility check & training of CNN.

(ii) Post Training Quantization and Quantization Aware training.
(iii) SNN conversion and deployment to AKD1000 NSoC.

Other software versions used are Python 3.9 and TensorFlow 2.11.1.

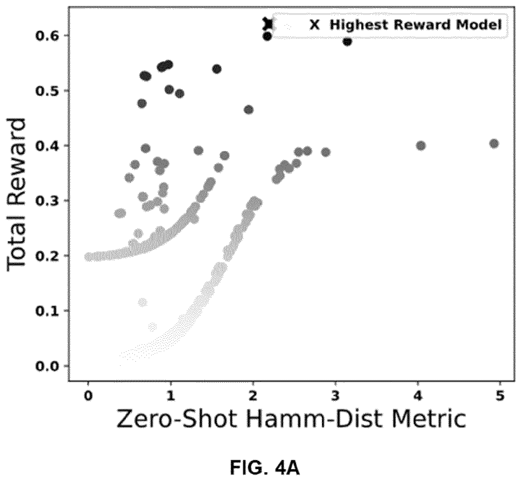

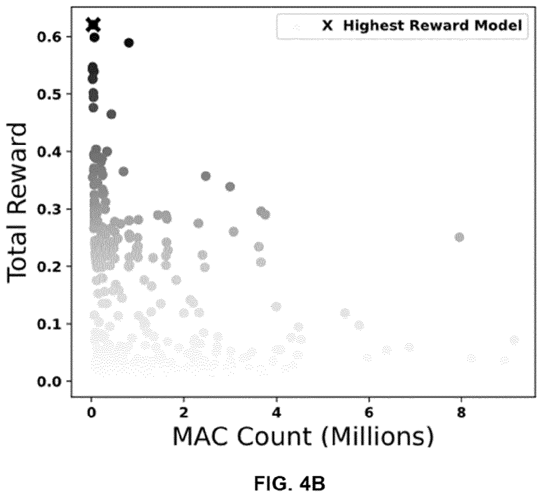

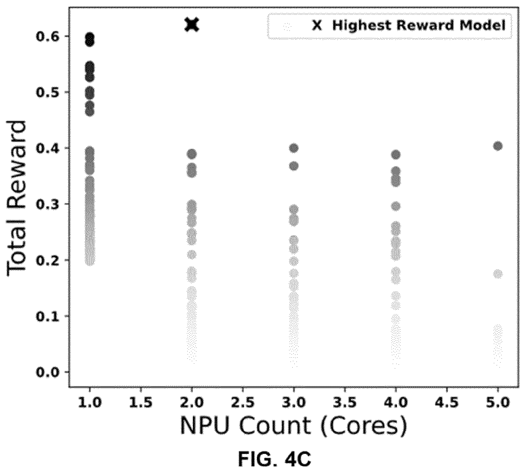

**Results & Discussion:** As seen from Table 1, it took many attempts of full network training to fine-tune the network architecture. Comparatively, F-NAS with modified F-NAS reward took 15x less time to find a similar network architecture with comparable pixel-wise accuracy and mean IoU. F-NAS found model took slightly less energy and latency for a 384x384 test patch. 3 performance metrics are used to score NAS-generated models using the reward function, the hamming distance-based metric is supposed to be maximized whereas Multiply Accumulate Count (MAC) & Neural Processing Units (NPU) consumed after deploying to AKD1000) are supposed to be minimized. As seen from FIGS. 4A, 4B and 4C the best NAS found model can correctly balance the KPI of the reward function.

Table 1

| Performance metrics comparison between handcrafted and NAS generated patch-level binary classification model for cloud cover detection. | | |
|---|---|---|
| Metrics | Handcrafted Model | Best NAS Model ( system 100) |
| Pixel Accuracy | 91.22 | 90.75 |
| Mean IoU | 81.40 | 80.27 |
| Latency (ms/patch) | 144.69 | 118.51 |
| Energy (mJ/patch) | 0.397 | 0.274 |
| Search Time (Hours) | 16.00 | 1.15 |

The method and system enables hardware-specific deployment on AKIDA AKD1000 neuromorphic processor. The modified F-NAS reward function uses modified hamming distance based heuristic function provides a robust metric, which in combination with other SNN constraints such as NPU count and MAC count, reduces the search time by an order of 15x. For more complex tasks requiring complex bigger networks, search time savings will be even higher.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200) for generating Spiking Neural Network (SNN) for neuromorphic devices, the method comprising:

   receiving (202), by one or more hardware processors, a raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs), multi-objective optimization priorities specifying at least one of metrics comprising an accuracy for classification task, a Root Mean Squared Error (RMSE) for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha, and a discount rate parameter gamma;
   defining (204), by the one or more hardware processors, a Reinforcement Learning NAS (RL-NAS) space, the RL-NAS space specifying a plurality of layers available for selection, wherein the plurality of layers comprising a set of primary layers, a set of composite layers, and a set of activation layers;
   generating (206), by the one or more hardware processors, a SNN constrained RL-NAS space by imbibing into the RL NAS space, a set of SNN constraints in form of a constrained graph, wherein the set of SNN constraints specify a layer ordering, a valid quantization bitwidth, layer shape, padding, and data format associated with each of a plurality of neuromorphic hardware of neuromorphic devices;
   obtaining (208), by the one or more hardware processors, an optimal SNN compliant DNN model having highest reward value by performing a plurality of iterations during reinforcement learning within the SNN constrained RL-NAS space using a Faster-NAS (F-NAS) technique based on a modified F-NAS reward as a function of the SHD parameter, a NPU count and a Multiply Accumulate Count (MAC), wherein a higher reward is given for maximization of SHD and minimization of the MAC count and the NPU count, wherein the optimal SNN compliant DNN model meets set of hardware metric constraints, the accuracy for, the RMSE and the IOU for the received task description and the NPU count for the specified hardware;
   training (210), by the one or more hardware processors, the optimal SNN compliant DNN model on the raw training dataset using standard hyperparameters by using an AutoML technique; and
   obtaining (212), by the one or more hardware processors, via a neuromorphic OEM converter associated with the target neuromorphic device, the optimal SNN, from the trained optimal DNN model, for deployment on the target neuromorphic device for executing the target application during an inference stage.

2. The method as claimed in claim 1, wherein the modified F-NAS reward is mathematical function represented as:

$$R = \frac{(W_1(scaled\_hamming\_distance) + W_2\sigma(-NPU_{count}) + +W_3\sigma(-MAC_{count})}{W_1 + W_2 + W_3},$$

wherein $W_1$, $W_2$ and $W_3$ refer to the weights provided with respect to one of a task priority, and multi-objectives to be fulfilled.

3. The method as claimed in claim 1, wherein the set of SNN constraints specify a set of rules, wherein a subset of rules from the set of rules for a first type of neuromorphic hardware from among the plurality of neuromorphic hardware comprises:

    selected layers from among the plurality of layers must be last channels,
    all processing quantized layers and ActivationDiscreteRelu must have the valid quantization bit width,
    a Dense layer input shape belongs to (N) or (1, 1, N),
    a BatchNormalization layer 'axis' set to -1,
    a BatchNormalization layer cannot benegative gammas,
    Reshape layers tensor shape belongs to (N,) or (1, 1, N),
    only one pooling layer to be used in each block, and
    a MaxPool2D layer must have the same 'padding' as the corresponding processing quantized layer.

4. The method as claimed in claim 3, wherein the layer ordering constraint for SNN, for the first neuromorphic architecture comprises:

    a block of Keras layers to start with a processing quantized layer,
    if a BatchNormalization or GlobalAvgPool2D layer is present, to be placed before the activation layer,
    a Flatten layer to be used only before a Dense layer, and

    the activation layer other than ReLU can only be used in the last layer.

5. The method as claimed in claim 1, wherein

    the explore-exploit trade off parameter epsilon is a Reinforcement Learning (RL) parameter dividing the RL NAS into an exploration phase and exploitation phase, and
    the learning rate parameter alpha and the discount rate parameter gamma are RL parameters used for RL agent training for F-NAS technique.

6. A system (100) for generating Spiking Neural Network (SNN) for neuromorphic devices, the system (100) comprising:

    a memory (102) storing instructions;
    one or more Input/Output (I/O) interfaces (106); and
    one or more hardware processors (104) coupled to the memory (102) via the one or more I/O interfaces (106), wherein the one or more hardware processors (104) are configured by the instructions to:

        receive a raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs), multi-objective optimization priorities specifying at least one of metrics comprising an accuracy for classification task, a Root Mean Squared Error (RMSE) for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha , and a discount rate parameter gamma;
        define a Reinforcement Learning NAS (RL-NAS) space, the RL-NAS space specifying a plurality of layers available for selection, wherein the plurality of layers comprising a set of primary layers, a set of composite layers, and a set of activation layers;
        generate a SNN constrained RL-NAS space by imbibing into the RL NAS space a set of SNN constraints in form of constrained graph, wherein the set of SNN constraints specify a layer ordering, a valid quantization bit width, layer shape, padding, and data format associated with each of a plurality of neuromorphic hardware of neuromorphic devices;
        obtain an optimal SNN compliant DNN model having highest reward value by performing a plurality of iterations during reinforcement learning within the SNN constrained RL-NAS space using a Faster-NAS (F-NAS) technique based on a modified F-NAS reward as a function of the SHD parameter, a NPU count and a Multiply Accumulate Count (MAC), wherein a higher reward is given for maximization of SHD and minimization of the MAC count and the NPU count, wherein the optimal SNN compliant DNN model meets the set of hardware metric constraints, the accuracy for, the RMSE and the IOU for the received task description and the NPU count for the specified hardware;

train the optimal SNN compliant DNN model on the raw training dataset using standard hyperparameters by using an AutoML technique; and

obtain via a neuromorphic OEM converter associated with the target neuromorphic device the optimal SNN, from the trained optimal DNN model, for deployment on the target neuromorphic device for executing the target application during inference stage.

**7.** The system as claimed in claim 6, wherein the modified F-NAS reward is mathematical function represented as:

$$R = \frac{(W_1(scaled\_hamming\_distance) + W_2\sigma(-NPU_{count}) + + W_3\sigma(-MAC_{count})}{W_1 + W_2 + W_3},$$

wherein $W_1$, $W_2$ and $W_3$ refer to the weights provided with respect to one of task priority and multi-objectives to be fulfilled.

**8.** The system as claimed in claim 6, wherein the set of SNN constraints specify a set of rules, wherein a subset of rules from the set of rules for a first type of neuromorphic hardware from among the plurality of neuromorphic hardware comprises:

selected layers from among the plurality of layers must be last channels all processing quantized layers and ActivationDiscreteRelu must have the valid quantization bit width.
a Dense layer input shape belongs to (N) or (1, 1, N),
a BatchNormalization layer 'axis' set to -1,
a BatchNormalization layer cannot benegative gammas,
Reshape layers tensor shape belongs to (N,) or (1, 1, N),
only one pooling layer to be used in each block, and
a MaxPool2D layer must have the same 'padding' as the corresponding processing quantized layer,

**9.** The system as claimed in claim 8, wherein the layer ordering constraint for SNN, for the first neuromorphic architecture comprises:

a block of Keras layers to start with a processing quantized layer,
if a BatchNormalization or GlobalAvgPool2D layer is present, to be placed before the activation layer,
a Flatten layer to be used only before a Dense layer, and

the activation layer other than ReLU can only be used in the last layer.

**10.** The system as claimed in claim 6, wherein

the explore-exploit trade off parameter epsilon is a Reinforcement Learning (RL) parameter, dividing the RL NAS into an exploration phase and exploitation phase, and
the learning rate parameter alpha and the discount rate parameter gamma are RL parameters used for RL agent training for F-NAS technique.

**11.** One or more non-transitory machine-readable information storage mediums comprising one or more instructions which when executed by one or more hardware processors:

receiving a raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs), multi-objective optimization priorities specifying at least one of metrics comprising an accuracy for classification task, a Root Mean Squared Error (RMSE) for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha, and a discount rate parameter gamma;

defining a Reinforcement Learning NAS (RL-NAS) space, the RL-NAS space specifying a plurality of layers available for selection, wherein the plurality of layers comprising a set of primary layers, a set of composite layers, and a set of activation layers;

generating a SNN constrained RL-NAS space by imbibing into the RL NAS space, a set of SNN constraints in form of a constrained graph, wherein the set of SNN constraints specify a layer ordering, a valid quantization bitwidth, layer shape, padding, and data format associated with each of a plurality of neuromorphic hardware of neuromorphic devices;

obtaining an optimal SNN compliant DNN model having highest reward value by performing a plurality of iterations during reinforcement learning within the SNN constrained RL-NAS space using a Faster-NAS (F-NAS) technique based on a modified F-NAS reward as a function of the SHD parameter, a NPU count and a Multiply Accumulate Count (MAC), wherein a higher reward is given for maximization of SHD and minimization of the MAC count and the NPU count, wherein the optimal SNN compliant DNN model meets set of hardware metric constraints, the accuracy for, the RMSE and the IOU for the received task description and the NPU count for the specified hardware;

training the optimal SNN compliant DNN model on the raw training dataset using standard hyperparameters by using an AutoML technique; and

obtaining via a neuromorphic OEM converter associated with the target neuromorphic device, the optimal SNN, from the trained optimal DNN model, for deployment on the target neuromorphic device for executing the target application during an inference stage.

**12.** The one or more non-transitory machine-readable information storage mediums as claimed in claim 11, wherein the modified F-NAS reward is mathematical function represented as:

$$R = \frac{(W_1(scaled\_hamming\_distance) + W_2\sigma(-NPU_{count}) + + W_3\sigma(-MAC_{count})}{W_1 + W_2 + W_3},$$

wherein $W_1$, $W_2$ and $W_3$ refer to the weights provided with respect to one of a task priority, and multi-objectives to be fulfilled.

**13.** The one or more non-transitory machine-readable information storage mediums as claimed in claim 11, wherein the set of SNN constraints specify a set of rules, wherein a subset of rules from the set of rules for a first type of neuromorphic hardware from among the plurality of neuromorphic hardware comprises:

selected layers from among the plurality of layers must be last channels,
all processing quantized layers and ActivationDiscreteRelu must have the valid quantization bit width,
a Dense layer input shape belongs to (N) or (1, 1, N),
a BatchNormalization layer 'axis' set to -1,
a BatchNormalization layer cannot benegative gammas,
Reshape layers tensor shape belongs to (N,) or (1, 1, N),
only one pooling layer to be used in each block, and
a MaxPool2D layer must have the same 'padding' as the corresponding processing quantized layer.

**14.** The one or more non-transitory machine-readable information storage mediums as claimed in claim 13, wherein the layer ordering constraint for SNN, for the first neuromorphic architecture comprises:

a block of Keras layers to start with a processing quantized layer,
if a BatchNormalization or GlobalAvgPool2D layer is present, to be placed before the activation layer,
a Flatten layer to be used only before a Dense layer, and

the activation layer other than ReLU can only be used in the last layer.

**15.** The one or more non-transitory machine-readable information storage mediums as claimed in claim 11, wherein

the explore-exploit trade off parameter epsilon is a Reinforcement Learning (RL) parameter dividing the RL NAS into an exploration phase and exploitation phase, and

the learning rate parameter alpha and the discount rate parameter gamma are RL parameters used for RL agent training for F-NAS technique.

System 100

Processor(s) 104

I/O Interface(s) 106

Memory 102

Database 108

Modules 110

F-NAS technique :
modified F-NAS reward
(SHD, NPU count. MAC count)

FIG. 1A

Raw training dataset
( non-spike format,
normal world data)
Associated with
augmentation and
transformation

Search space
(SNN OEM supported)

Set of constraints:
General constraints
such as accuracy/
latency
And set of SNN
constraints such as
NPU count etc.

F-NAS technique
modified F-NAS reward
(SHD, NPU count. MAC count)
RL based multi-objective
optimization

OEM based SNN model
hardware optimization
E.g. OEM- Brainchip, Intel LAVA

Final model:
Optimal SNN to be
deployed on target
neuromorphic hardware

FIG. 1B

200

receive a raw training dataset in non-spike data format, a task description associated with a target application to be executed by an optimized SNN deployed on a target neuromorphic device, a set of hardware metric constraints of the target neuromorphic device specifying memory constraints and number of Neuromorphic Processing Units (NPUs), multi-objective optimization priorities specifying at least one of metrics comprising an accuracy for classification task, a RMSE for regression tasks, and Intersection over Union (IOU) for segmentation tasks, and hardware constraints for SNN specifying a NPU count, and a plurality of SNN Neural Architecture Search (NAS) hyperparameters comprising total episodes, explore episodes, Scaled Hamming Distance (SHD) episodes, a explore-exploit trade off parameter epsilon, a learning rate parameter alpha, and a discount rate parameter gamma — 202

define a Reinforcement Learning NAS (RL-NAS) space, the RL-NAS space specifying a plurality of layers available for selection — 204

generate a SNN constrained RL-NAS space by imbibing into the RL NAS space the set of SNN constraints in form of constrained graph — 206

A

**FIG. 2A**

200

(A)

obtain an optimal SNN compliant DNN model having highest reward value by performing iterations during reinforcement learning within the SNN constrained RL-NAS space using a Faster-NAS (F-NAS) technique based on a modified F-NAS reward as a function of the SHD parameter, a NPU count and a Multiply Accumulate Count (MAC) ⎯ 208

train the optimal SNN compliant DNN model on the raw training dataset using standard hyperparameters by using an AutoML technique ⎯ 210

obtain via a neuromorphic OEM converter associated with the target neuromorphic device the optimal SNN, from the trained optimal DNN model, for deployment on the target neuromorphic device for executing the target application during inference stage ⎯ 210

**FIG. 2B**

Initial Search Space: {S1, S2, S3, ..... , Sn}

Constraints : {C1, C2, C3, ........, Cn}

C1 : {layer ordering} = {SeparableConv, MaxPool, BatchNorm, Activation}

C2: {DenseLayer_input: {(N},(1,1,N)}

C3: {BatchNorm_axis: {(-1)}

**Reward Function for Learning**

$$R = (W_1\sigma(hamming\_distance) + W_2\sigma(-NPU_{count}) + W_3\sigma(-MAC_{count}))/(W_1 + W_2 + W_3)$$

FIG. 3

FIG. 4A

FIG. 4B

FIG. 4C

Europäisches
Patentamt

European
Patent Office

Office européen
des brevets

## EUROPEAN SEARCH REPORT

**Application Number**

EP 25 18 4369

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RACHMAD VIDYA WICAKSANA PUTRA ET AL: "HASNAS: A Hardware-Aware Spiking Neural Architecture Search Framework for Neuromorphic Compute-in-Memory Systems", ARXIV.ORG, CORNELL UNIVERSITY LIBRARY, 201 OLIN LIBRARY CORNELL UNIVERSITY ITHACA, NY 14853, 30 June 2024 (2024-06-30), XP091804330, * abstract; figures 3, 5, 6, 8 * * page 2 - page 8 * | 1-15 | INV. G06N3/049 G06N3/092 G06N3/0985 G06N3/045 |
| Y | EP 4 261 749 A1 (TATA CONSULTANCY SERVICES LTD [IN]) 18 October 2023 (2023-10-18) * paragraph [0033] - paragraph [0037] * | 1-15 | |
| A | YAN JIAQI ET AL: "Efficient spiking neural network design via neural architecture search", NEURAL NETWORKS., vol. 173, 16 February 2024 (2024-02-16), page 106172, XP093329139, GB ISSN: 0893-6080, DOI: 10.1016/j.neunet.2024.106172 * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 24 November 2025 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 4369

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2025

| Patent document cited in search report | | Publication date | Patent family member(s) | | Publication date |
|---|---|---|---|---|---|
| EP 4261749 | A1 | 18-10-2023 | EP | 4261749 A1 | 18-10-2023 |
| | | | US | 2023334330 A1 | 19-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421058111

- IN 202321067480

**Non-patent literature cited in the description**

- **MOHAJERANI, S.** ; **SAEEDI, P.** Cloud-Net: An End-To-End Cloud. *Detection Algorithm for Landsat 8 Imagery in IGARSS 2019 - 2019 IEEE International Geoscience and Remote Sensing Symposium*, July 2019, 1029-1032

- **MOHAJERANI, S.** ; **KRAMMER, T. A.** ; **SAEEDI, P.** A Cloud Detection Algorithm for Remote Sensing Images Using Fully Convolutional Neural Networks. *2018 IEEE 20th International Workshop on Multimedia Signal Processing (MMSP)*, August 2018, 1-5